# EUROPÄISCHE PATENTSCHRIFT

(11) **EP 0 590 194 B1**
(45) Veröffentlichungstag und Bekanntmachung des Hinweises auf die Patenterteilung: **06.09.1995**
(21) Anmeldenummer: 92116765.6
(22) Anmeldetag: 30.09.1992
(51) Int. Cl.: B44C 3/00, B41M 5/24, B44C 1/02, B60K 37/00

(54) **Verfahren zur Herstellung einer Sichtblende, insbesondere einer Frontblende in einem Kraftfahrzeug-Bediengerät**
Process for manufacturing a decorative panel, especially for motor-vehicle dashboard controls
Procédé pour fabriquer une plaque de décor, notamment pour tableaux de bord de voitures automobiles

(43) Veröffentlichungstag der Anmeldung: 06.04.1994
(73) Patentinhaber: SIEMENS AKTIENGESELLSCHAFT, 80333 München (DE)
(72) Erfinder: Kusuma, Djuanarto-Adi, W-8633 Rödental (DE); Götz, Siegfried, W-8630 Coburg (DE)

(56) Entgegenhaltungen:
- DE-A- 4 018 411
- US-A- 4 968 526
- Derwent Publications Ltd., London, GB; AN 91-152447; JP A 03 087 221 (TOKAI RIKA DENKI K.K.) 12.04.1991
- PATENT ABSTRACTS OF JAPAN, 8 Juni 1988; JP A 63 001 483 (MITSUBISHI ELECTRIC CORP.) 06.01.1988

## Beschreibung

Die Erfindung bezieht sich auf ein Verfahren zur Herstellung einer Sichtblende, insbesondere einer Frontblende in einem Kraftfahrzeug-Bediengerät, gemäß Anspruch 1.

Sichtblenden siehe z.B. US-A-4 968 526, insbesondere armaturenbrettseitige Frontblenden von Kraftfahrzeug-Bediengeräten, weisen in einer ansonsten lichtundurchlässigen Oberfläche Anzeigeflächen unterschiedlicher Farbkennung und Symboldarstellung, z.B. in Form von Piktogrammen, Schwertkeilen bzw. Zahlenwerten auf, die die jeweilge Einstellung von zugeordneten Einstellelementen, vor allem in Form von Schiebereglern bzw. Drehknöpfen, erleichtern sollen; die Farbkennungen sind vorzugsweise in bestimmtem Nachdesign durchleuchtbar, derart daß von einem hinter der Sichtblende angeordneten Beleuchtungselement, insbesondere über Lichtleiter, eine eindeutige Farberkennung auch im Dunkeln möglich ist. Als Träger für die Farbkennung dient in der Regel ein lichtdurchlässiger Kunststoff.

Der Erfindung liegt die Aufgabe zugrunde, in fertigungstechnisch einfacher Weise konturierte Anzeigeflächen unterschiedlicher Farbkennung auf deren Träger in Form einer Kunststoff-Frontblende auftragen zu können; zur Lösung dieser Aufgabe sind erfindungsgemäß zumindest die Verfahrensschritte a) bis c) gemäß Anspruch 1 vorgesehen; vorteilhafte Ausgestaltungen des Verfahrens sind jeweils Gegenstand der Unteransprüche.

Durch die erfindungsgemäßen Verfahrensschritte ist es möglich, mehrere Farbkennungen, zu denen auch Mischfarben von mehreren übereinanderliegenden Farben zählen können, durch bestimmtes Weglasern von für die jeweilige Farberkennung nicht gewünschten, zuvor einfach überlackierten Farben herzustellen und farbintensive sauberkonturierte Anzeigenflächen, insbesondere in den stark markierenden Farben rot und blau, durch Auflasern von einer entsprechend vorbereiteten Folie aufzutragen. Zum Auflasern wird dazu vorzugsweise ein sogenannter YAG-Laser und zum Auflasern das Transferdrucken mit einem CO₂-Laser vorgesehen; beide Laserarten sind z.B. durch die Siemens Druckschrift A 19 100-F-B 008-X-6F00 der Hauptabteilung Produktionstechnik in Oostkamp zum Lasermarkieren und Oberflächenstrukturieren bekannt.

Zweckmäßigerweise werden die auflackierten Lackschichten, von denen eine oder mehrere als Farbkennung verbleiben, nur auf entsprechenden Teilbereichen des Kunststofftragkörpers aufgetragen; als Abdunklung für die gesamte Sichtblende wird vor der Laserstrahlbearbeitung zweckmäßigerweise als letzte Vorbearbeitung ein lichtundurchlässiger Farbauftrag ganzflächig aufgetragen, der anschließend als erster Laserstrahlbearbeitungsvorgang im Bereich der Anzeigeflächen ausgelasert wird.

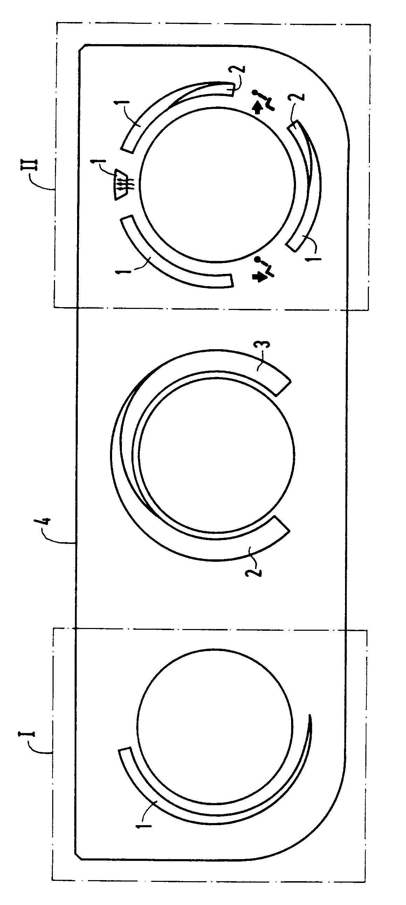

Die Erfindung wird im folgenden anhand eines schematisch dargestellten Ausführungsbeispiels in der Zeichnung näher erläutert, die die armaturenbrettseitige Draufsicht auf die Frontblende eines Kraftfahrzeug-Bediengerätes zeigt.

Die Figur zeigt die schematische Darstellung einer Frontblende eines Kraftfahrzeug-Bediengerätes bei demontierten Drehschaltern, von denen der linke zur Einstellung der Drehzahl eines Ventilators mit zugehöriger weiß-orange eingefärbter Schwertkeil-Anzeigefläche 1, der mittlere zur Einstellung der Lufttemperatur mit blau eingefärbter Schwertkeil-Anzeigefläche 2 für kalte Temperatur und rot eingefärbter Schwertkeil-Anzeigefläche 3 für warme Temperatur und der rechte Drehkopf zur Einstellung der Luftverteilung in verschiedene Luftverteilungsebenen mit weißorange eingefärbten Anzeigeflächen 1 und in der Mittelebene blau eingefärbten zusätzlichen Schwertkeil-Anzeigeflächen 2 zur Beimischung eines Kaltluftanteils vorgesehen sind.

Zur Herstellung der Anzeigeflächen 1;2;3 durchleuchtbarer unterschiedlicher Farbkennung sind folgende Arbeitsschritte zur Behandlung der Frontblende in Form eines Kunststoff-Tragkörpers 4 vorgesehen:
1. Flächiges Lackieren des Kunststoff-Tragkörpers 4 mit Orange-Farbe vorzugsweise lediglich in den Teilbereichen I und II.
2. Flächiges Lackieren des Kunststoff-Tragkörpers 4 mit Weiß-Farbe vorzugsweise lediglich in den Teilbereichen I und II.
3. Flächiges Lackieren über den gesamten Frontblendenbereich des Kunststoff-Tragkörpers 4 mit lichtundurchlässiger Schwarz-Farbe .
4. Auslasern, vorzugsweise durch einen YAG-Laser, der Schwarz-Farben in allen Bereichen der Anzeigeflächen 1;2;3.
5. Auslasern, vorzugsweise mit einem YAG-Laser, der Weiß-Farbe und Orange-Farbe im Bereich der Schwertkeil-Anzeigeflächen 2 im Teilbereich II.
6. Auflasern, vorzugsweise mit einem CO₂-Laser, der Blau-Farbe bzw. Rot-Farbe im Bereich der Anzeigeflächen 2 bzw. 3.

## Patentansprüche

1. Verfahren zur Herstellung einer Sichtblende, insbesondere einer Frontblende in einem Kraftfahrzeug-Bediengerät, mit konturierten Anzeigeflächen (1;2;3) unterschiedlicher durchleuchtbarer Farbkennung, mit den Merkmalen:
a) Auf einen lichtdurchlässigen Kunststoff-Tragkörper (4) werden flächig mehrere, verschiedenen Farbkennungen entsprechende, Farbschichten übereinander aufgetragen;
b) im Bereich von ersten Anzeigeflächen (1) werden bis auf die vorgesehene Farbkennung die überdeckenden Farbschichten durch Auslasern konturiert abgetragen;
c) im Bereich zumindest einer weiteren Anzeigefläche (2;3) werden sämtliche Farbschichten konturiert abgetragen und die vorgesehene Farbkennung durch anschließendes Auslasern von einer aufgelegten Folie aufgetragen.

2. Verfahren nach Anspruch 1 mit dem Merkmal:
d) Die Farbschichten werden nur auf Teilbereiche (I;II)des Kunststoff-Tragkörpers (4) flächig und konturenüberschreitend aufgetragen.

3. Verfahren nach Anspruch 1 und/oder 2 mit dem Merkmal:
e) Als letzte obere Farbschicht wird über den gesamten Sichtbereich des Kunststoff-Tragkörpers (4) eine lichtundurchlässige, insbesondere schwarze, im Bereich der Anzeigeflächen (1;2;3) zum Abtragen durch Auslasern vorgesehene Deck-Farbschicht aufgetragen.

4. Verfahren nach einem der Ansprüche 1-3 mit dem Merkmal:
f) Als Farbkennung werden Farbkombinationen mit zumindest zwei konturendeckend übereinander liegenden Farbschichten vorgesehen.

5. Verfahren nach Anspruch 4 mit dem Merkmal:
g) Als Farbkombinationen werden die Farbschichten weiß und orange für erste Anzeicheflächen (1) übereinander aufgetragen.

6. Verfahren nach einem der Ansprüche 1-5 mit dem Merkmal:
h) Durch Auslasern von einer aufgelegten Folie werden die Farbschichten blau bzw. rot auf zweite bzw. dritte Anzeigeflächen (2, 3) aufgetragen.

7. Verfahren nach einem der Ansprüche 1-5 mit dem Merkmal:
i) Die flächig aufgetragenen Farbschichten werden auflackiert.

8. Verfahren nach einem der Ansprüche 1-7 mit dem Merkmal:
j) Die Anzeigeflächen (1;2;3) werden auf einen transparenten Kunststoff-Tragkörper (4) aufgetragen.

9. Verfahren nach einem der Ansprüche 1-8 mit dem Merkmal:
k) Die Anzeigenflächen (1;2;3) werden auf einen weißen Kunststoff-Tragkörper (4) aufgetragen.

10. Verfahren nach einem der Ansprüche 1-9 mit dem Merkmal:
l) Der Kunststoff-Tragkörper (4) wird als Frontblende in ein armaturenbrettseitiges Bediengerät eines Klima- bzw. Lüftungsgerätes in einem Kraftfahrzeug eingebaut.

## Claims

1. Process for manufacturing a decorative panel, especially a front panel in motor vehicle dashboard controls, having contoured display areas (1; 2; 3) of different coloured signals which can be shone through, with the features:
a) a plurality of coloured layers, corresponding to different coloured signals, are applied in one plane, one above another, to a transparent plastics carrier member (4);
b) in the region of first display areas (1), the covering coloured layers are removed in contoured fashion by laser machining, except for the coloured signal envisaged;
c) in the region of at least one further display area (2; 3), all the coloured layers are removed in contoured fashion and the coloured signal envisaged is applied by subsequent laser machining of an applied film.

2. Process according to Claim 1 with the feature:
d) the coloured layers are applied only to partial regions (I; II) of the plastics carrier member (4) in one plane and extending beyond the contours.

3. Process according to Claim 1 and/or 2 with the feature:
e) as the last upper coloured layer, a non-transparent, preferably black, covering coloured layer is applied over the entire viewing region of the plastics carrier member (4), and is to be removed by laser machining in the region of the display areas (1; 2; 3).

4. Process according to one of Claims 1-3 with the feature:
f) coloured combinations having at least two coloured layers which cover the contours and are located one above the other are provided as coloured signal.

5. Process according to Claim 4 with the feature:
g) the coloured layers white and orange are applied one above another as colour combinations for first display areas (1).

6. Process according to one of Claims 1-5 with the feature:
h) the coloured layers blue and/or red are applied to second and/or third display areas (2, 3) by laser machining of an applied film.

7. Process according to one of Claims 1-5 with the feature:
i) the coloured layers applied in one plane are varnished.

8. Process according to one of Claims 1-7 with the feature:
j) the display areas (1; 2; 3) are applied to a transparent plastics carrier member (4).

9. Process according to one of Claims 1-8 with the feature:
k) the display areas (1; 2; 3) are applied to a white plastics carrier member (4).

10. Process according to one of Claims 1-9 with the feature:
l) the plastics carrier member (4) is incorporated in a motor vehicle as a front panel in dashboard controls of an air-conditioning or ventilating device.

## Revendications

1. Procédé pour fabriquer un écran de visualisation, notamment un écran frontal dans un appareil de commande de véhicule automobile, comportant des surfaces d'affichage profilées (1;2:3) avec des caractérisations colorées différentes pouvant être transmises en transparence, présentant les caractéristiques suivantes :
a) sur un corps de support en matière plastique transparent (4) on dépose en nappe, les unes sur les autres, plusieurs couches colorées qui correspondent à des caractérisations colorées différentes;
b) dans la zone de premières surfaces d'affichage (1), on retire au laser, avec un contourage, les couches colorées en recouvrement, hormis la caractérisation colorée prévue;
c) dans la zone d'au moins une autre surface d'affichage (2;3), on retire, avec un contourage, toutes les couches colorées et on dépose la caractérisation colorée prévue, par post-élimination au laser d'une feuille apposée.

2. Procédé suivant la revendication 1, présentant la caractéristique suivante :
d) on dépose les couches colorées en nappe, en débordant au-delà des contours, uniquement sur des zones partielles (I; II) du corps de support en matière plastique (4).

3. Procédé suivant la revendication 1 et/ou 2, présentant la caractéristique suivante :
e) comme dernière couche colorée supérieure, on dépose, sur l'ensemble de la zone d'observation du corps de support en matière plastique (4), la couche colorée de revêtement, opaque à la lumière, notamment noire, destinée à être éliminée par laser dans la zone des surfaces d'affichage (1;2;3).

4. Procédé suivant l'une des revendications 1-3 présentant la caractéristique suivante :
f) comme caractérisation colorée, on prévoit des combinaisons de couleurs comportant au moins deux couches colorées superposées avec des contours coïncidants.

5. Procédé suivant la revendication 4, présentant la caractéristique suivante :
g) comme combinaisons de couleurs, on dépose les couches colorées blanche et orange en superposition pour des premières surfaces d'affichage (1).

6. Procédé suivant l'une des revendications 1-5, présentant la caractéristique suivante :
h) par traitement au laser d'une feuille apposée, on dépose les couches colorées bleue et rouge sur les seconde et troisième surfaces d'affichage (2,3).

7. Procédé suivant l'une des revendications 1-5 présentant la caractéristique suivante :
i) on applique une laque sur les couches colorées déposées en nappe.

8. Procédé suivant l'une des revendications 1-7, présentant la caractéristique suivante :
j) on dépose les surfaces d'affichage (1;2;3) sur un corps de support en matière plastique transparente (4).

9. Procédé suivant l'une des revendications 1-8, présentant la caractéristique suivante :
k) on dépose les surfaces d'affichage (1;2;3) sur un corps de support en matière plastique blanche (4).

10. Procédé suivant l'une des revendications 1-9, présentant la caractéristique suivante :
l) on monte le corps de support en matière plastique (4) en tant qu'écran frontal dans un appareil de commande, situé sur le tableau de bord, d'une installation de climatisation ou d'aération d' un véhicule automobile.
